# EUROPEAN PATENT SPECIFICATION

(11) **EP 1 724 045 B1**
(45) Date of publication and mention of the grant of the patent: **30.04.2008**
(21) Application number: 06425005.3
(22) Date of filing: 04.01.2006
(51) Int. Cl.: B23D 47/04

(54) **Work bench for the cutting of sections**
Arbeitstisch zum Trennen von Profilen
Table de travail pour couper des profils

(30) Priority: 18.05.2005 IT MI20050906
(43) Date of publication of application: 22.11.2006
(73) Proprietor: CO.ME.R.G. di Ruta Giuseppe, 97015 Modica RG (IT)
(72) Inventor: Ruta, Giuseppe, 97015 Modica RG (IT)
(74) Representative: Concone, Emanuele

(56) References cited:
- US-A- 4 688 612
- US-A- 5 158 124

## Description

The present invention relates to a work bench, and in particular to a bench for the cutting of sections. Such a work bench is known from US 4688612.

Aluminium, iron or PVC sections are presently cut with suitable cutting machines at points that are roughly determined through manual measurements. However, an inaccurate size of the sections causes problems when they are used, especially if the sections are curved.

The manufacturing of frames for doors, windows and several other structures often requires the use of curved sections. If the size of said sections is not accurate, defective finished products will result. The problem is particularly serious in the case of sections made of aluminium, PVC or other materials that can not be joined by welding, since the latter allows to make up for small defects.

In order to obtain the desired sections, therefore, it is presently necessary to carry out a first cut at a safety length greater than the intended nominal length, and then proceed by attempts continuing to cut until the desired size is reached. Obviously, such a technique is expensive both in terms of time and material, and the results are not always acceptable.

Therefore the object of the present invention is to provide a device that allows to cut sections, especially curved sections, at the desired points so as to obtain quickly sections of the required size.

This object is achieved by means of a work bench according to the first claim. Preferred embodiments are disclosed in the remaining claims.

The main advantage of the work bench according to the present invention is therefore that of allowing to perform a quick and accurate cutting of the sections, with an evident saving in time and material as well as better final results.

A further advantage of this work bench stems from the fact that it is simple and cheap, and it can be used with single-head cutting machines of known type. Moreover, it is made up of assembled elements and it is therefore easily transportable to carry out on-site workings where the sections are to be mounted.

These and other advantages and characteristics of the work bench according to the present invention will be clear to those skilled in the art from the following detailed and non-limiting description of an embodiment thereof, with reference to the annexed drawings wherein:
Fig.1 shows a top plan view of a work bench according to the present invention;
Fig.2 shows a front view of said work bench;
Fig.3 shows a side view of said work bench; and
Figs.4 to 6 show top plan views of said work bench during cutting operations of curved sections having various shapes.

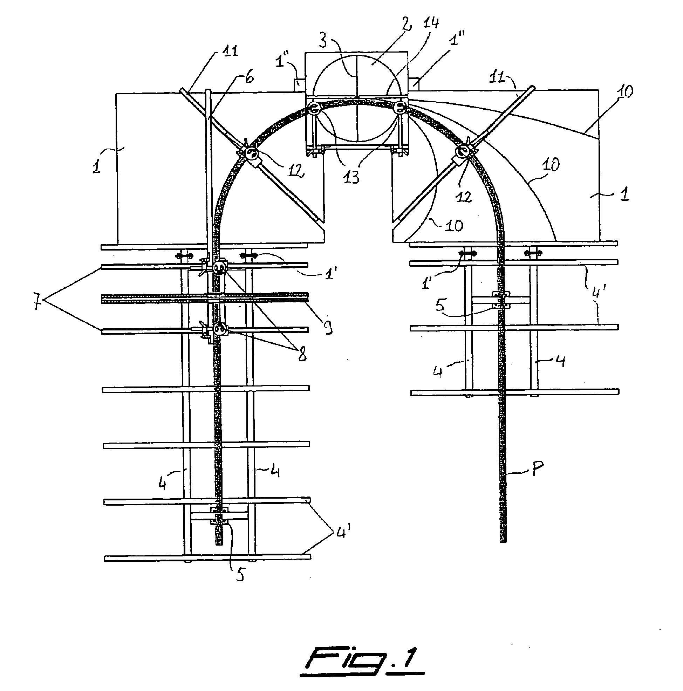

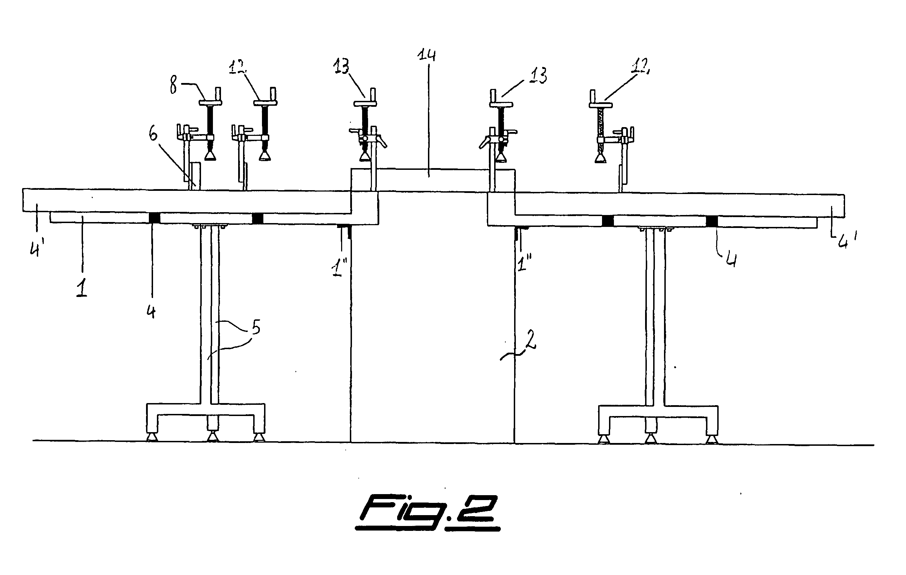

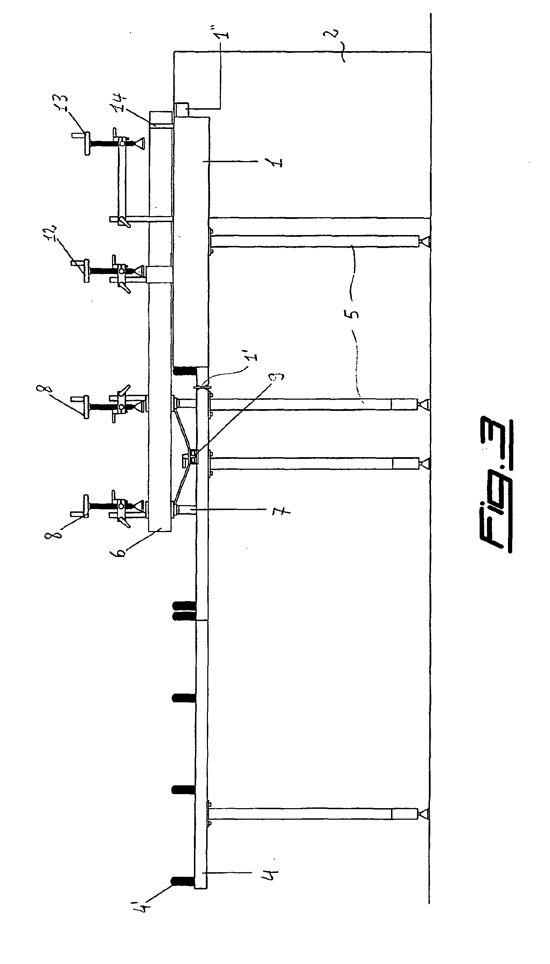

With reference to figures 1 to 3, there is seen that a work bench according to the present invention includes two horizontal bearing surfaces 1 arranged on opposite sides with respect to the head of a cutting machine 2. Said machine 2 is a single-head cutting machine provided with an ascending blade 3 and can perform a straight or angle cut, according to the needs, simply by orienting blade 3 that can usually be rotated through ±45°. This cutting machine 2 is known in the art and therefore need not be further described.

The two bearing surfaces 1 are connected through flanges 1' to a frame made up of longitudinal rods 4 carrying crossbars 4', that have a top surface in rubber or other material suitable to prevent the sections placed on the bench for the cut from sliding and/or scratching. The two bearing surfaces 1 are further connected through angle irons 1" to the cutting machine 2.

The assembly of the frame and the bearing surfaces 1 is supported by legs 5 in a number proportional to the size of the work bench (five in the illustrated example). Said legs 5 are adjustable in height so that the work bench according to the present invention can be suitably used also on uneven grounds. They may further be provided with wheels to move the bench.

On at least one of the two bearing surfaces 1 there is provided an abutment bar 6 parallel to blade 3, when the latter is at its "neutral" position at 0°. Said abutment bar 6 slides on two or more linear guides 7 perpendicular thereto, and carries also two or more holders 8 suitable to lock in the desired position the section P to be cut. In particular, in the embodiment illustrated in the figures said linear guides 7 and said holders 8 are two, with a holder 8 arranged at each linear guide 7.

Close to the two linear guides 7, preferably at an intermediate position therebetween, there is arranged a graduated bar 9 parallel thereto, that is provided with a millimetric reference system suitable to indicate the cross distance with respect to blade 3. The graduated bar 9 is further provided with means for locking the abutment bar 6 so that, upon finding the desired distance, holders 8 are precisely locked at said distance.

Linear guides 7 and the graduated bar 9 are mounted on the frame as well as abutment bar 6, that is arranged at such an height as to slide parallel to blade 3 on bearing surface 1. The sliding of abutment bar 6 can be manually or automatically controlled, through suitable control means.

The bearing surfaces 1 of the work bench are substantially rectangular and provided with a plurality of curvilinear grooves 10 suitable to act as guide lines for the cutting of curved sections (for the sake of clarity of the drawing only three grooves are depicted on the right surface). Each groove 10 corresponds to a specific radius of curvature and in the preferred embodiment the smallest radius of curvature is 300 mm, since in practice it is highly unlikely to use sections with a smaller radius of curvature, yet it is possible to form other grooves.

The work bench according to the present invention is also provided with at least two oblique linear guides 11 suitable to allow the sliding of at least two additional holders 12 on the bearing surfaces 1. Said oblique guides 11 are arranged on the bearing surfaces 1 so as to form with blade 3 an angle that is included between 15° and 50° (45° in the illustrated example).

The additional holders 12 are used to lock section P at the suitable radius of curvature, identified by means of grooves 10, and, to this purpose, they are preferably mounted on articulated supports that guarantee a perfect fit of section P to the radius of curvature.

A further pair of holders 13 are provided on the cutting machine 2 to lock section P close to the abutment bar 14 at which blade 3 operates. The position of these holders 13 is adjustable both in the transverse and longitudinal direction.

In the preferred embodiment, holders 8, 12 and 13 are mechanical holders with a locking system acting bottom-up, however it is possible to use holders with a different locking system or pneumatic holders.

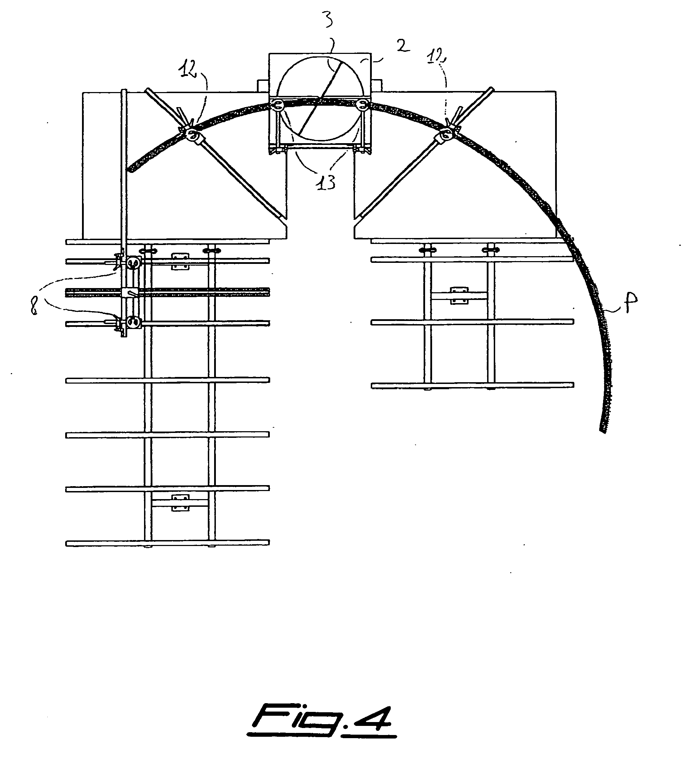

Figures 4 to 6 show the work bench according to the present invention being used with sections P having shapes different from the U-shaped section cut with a straight cut illustrated in fig.1.

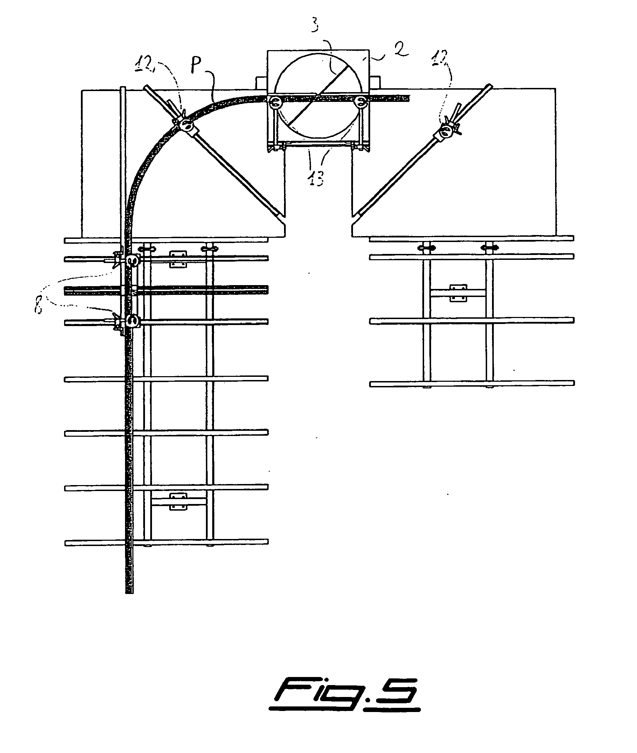

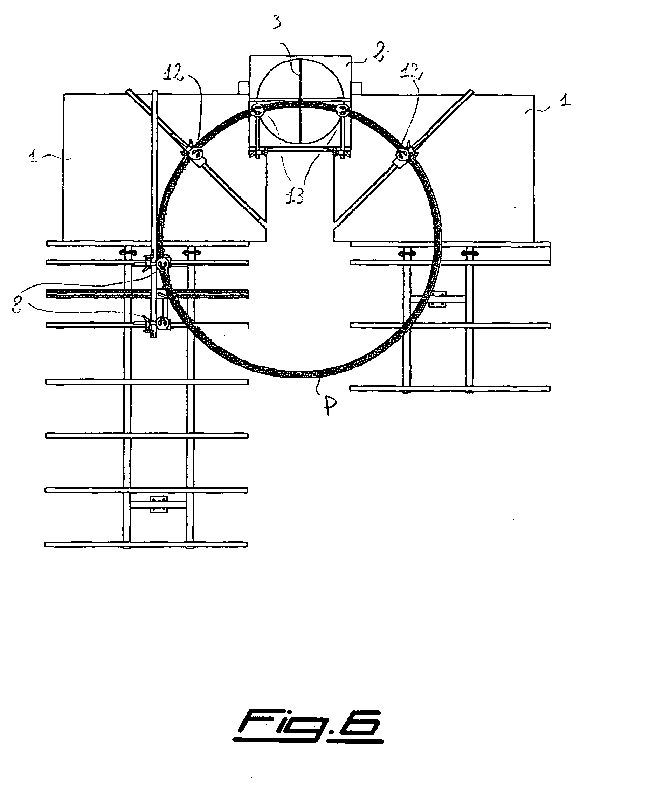

These figures show that it is possible to use only some of holders 8 and 12 depending on the working needs, namely according to the shape and size of the section P to be cut, whereas holders 13 are always used. In particular, figures 4 and 5 show an oblique cutting operation, whereas in figure 6 the cut is straight.

In order to obtain sections of the required size it is sufficient to place section P on the work bench according to the present invention, adjust the position of abutment bar 6, and therefore of holders 8, by means of the graduated bar 9, adjust the position of the additional holders 12 along the oblique guides 11 according to grooves 10, adjust the position of holders 13 and lock all the holders at the correct position. At this time, section P is locked in the correct position and it is therefore possible to activate the cutting machine 2 that will cut the section exactly to the desired size.

The work bench according to the present invention is made of iron or other suitable material, and the bearing surfaces 1 may have a cover in rubber or similar material, like bars 4', so as to prevent the sections from sliding or scratching.

It is clear that the above-described and illustrated embodiment of the work bench according to the invention is just an example susceptible of various modifications. In particular, number, shape, size and arrangement of the members that make up the frame (rods 4, bars 4', legs 5, etc.) can be freely changed according to specific needs in the manufacturing of the work bench.

Therefore, possible additions and/or modifications may be made to the work bench of the present invention, yet without departing from the scope of protection of the invention.

## Claims

1. Work bench for the cutting of sections (P), **characterized in that** it includes two horizontal bearing surfaces (1), provided with a plurality of curvilinear grooves (10), arranged on opposite sides with respect to the head of a cutting machine (2) to which they are integral, said bearing surfaces (1) being connected to a frame that carries an abutment bar (6), parallel to the blade (3) of said cutting machine (2), slidable along two or more linear guides (7) close to which there is arranged a graduated bar (9) suitable to indicate the cross distance with respect to said blade (3) and provided with means for locking said abutment bar (6), as well as at least one pair of adjustable holders (13) suitable to lock the section (P) close to an abutment bar (14) of the cutting machine (2), at which the blade (3) operates.

2. Work bench according to claim 1, **characterized in that** it further includes at least two oblique linear guides (11) suitable to allow the sliding of at least two additional holders (12) on the bearing surfaces (1).

3. Work bench according to claim 2, **characterized in that** the oblique guides (11) are arranged on the bearing surfaces (1) so as to form with the blade (3) an angle between 15° and 50°.

4. Work bench according to claim 2 or 3, **characterized in that** the additional holders (12) are mounted on articulated supports.

5. Work bench according to one of the preceding claims, **characterized in that** two or more further holders (8) are integral with the abutment bar (6).

6. Work bench according to the preceding claim, **characterized in that** each of said further holders (8) is arranged at each linear guide (7).

7. Work bench according to one of the preceding claims, **characterized in that** the frame is made up of longitudinal rods (4) carrying crossbars (4').

8. Work bench according to one of the preceding claims, **characterized in that** the assembly of the frame and the bearing surfaces (1) is supported by legs (5) that are adjustable in height.

9. Work bench according to one of the preceding claims, **characterized in that** the bearing surfaces (1) and/or the frame have a top surface in rubber or the like suitable to prevent the sections (P) from sliding or scratching.

10. Work bench according to one of the preceding claims, **characterized in that** the holders (8, 12, 13) are mechanical holders with a locking system acting bottom-up.

## Patentansprüche

1. Werkbank zum Trennen von Profilen (P), **dadurch gekennzeichnet, dass** sie zwei horizontale Auflagerflächen (1) aufweist, die mit einer Vielzahl von krummlinigen Nuten (10) versehen sind und die in Bezug auf den Kopf einer Trennmaschine (2), mit der sie als Einheit ausgebildet sind, an gegenüber liegenden Seiten angeordnet sind, wobei die Auflagerflächen (1) mit einem Rahmen verbunden sind, der eine Anlegeschiene (6) parallel zur Klinge (3) der Trennmaschine (2) und verschiebbar entlang zweier oder mehrerer linearer Führungen (7) aufweist, in deren Nähe eine Indexschiene (9) angeordnet ist, die dafür ausgelegt ist, den Querabstand in Bezug auf die Klinge (3) anzuzeigen, und die mit Mitteln zum Feststellen der Anlegeschiene (6) ebenso wie mit mindestens einem Paar einstellbarer Halter (13) ausgestattet sind, die dafür ausgelegt sind, das Profil (P) nahe einer Anlegeschiene (14) der Trennmaschine (2), an der die Klinge (3) arbeitet, festzustellen.

2. Werkbank nach Anspruch 1, **dadurch gekennzeichnet, dass** sie ferner mindestens zwei schräge lineare Führungen (11) aufweist, die dafür ausgelegt sind, die Verschiebung von mindestens zwei zusätzlichen Haltern (12) auf den Auflagerflächen (1) zu ermöglichen.

3. Werkbank nach Anspruch 2, **dadurch gekennzeichnet, dass** die schrägen Führungen (11) so auf den Auflagerflächen (1) angeordnet sind, dass sie mit der Klinge (3) einen Winkel zwischen 15° und 50 ° bilden.

4. Werkbank nach Anspruch 2 oder 3, **dadurch gekennzeichnet, dass** die zusätzlichen Halter (12) an gelenkigen Trägern befestigt sind.

5. Werkbank nach einem der vorangehenden Ansprüche, **dadurch gekennzeichnet, dass** zwei oder mehr weitere Halter (8) mit der Anlegeschiene (6) als Einheit ausgebildet sind.

6. Werkbank nach dem vorangehenden Anspruch, **dadurch gekennzeichnet, dass** jeweils einer der weiteren Halter (8) an jeweils einer der einzelnen Führungen (7) angeordnet ist.

7. Werkbank nach einem der vorangehenden Ansprüche, **dadurch gekennzeichnet, dass** der Rahmen aus in Längsrichtung verlaufenden Stäben (4), welche Kreuzschienen (4') tragen, besteht.

8. Werkbank nach einem der vorangehenden Ansprüche, **dadurch gekennzeichnet, dass** die Anordnung aus dem Rahmen und den Auflagerflächen (1) von Beinen (5) getragen wird, die höhenverstellbar sind.

9. Werkbank nach einem der vorangehenden Ansprüche, **dadurch gekennzeichnet, dass** die Auflagerflächen (1) und/oder der Rahmen eine Oberseite aus Gummi oder dergleichen aufweist/aufweisen, die dafür ausgelegt ist, zu verhindern, dass die Profile (P) verrutschen oder verkratzt werden.

10. Werkbank nach einem der vorangehenden Ansprüchen, **dadurch gekennzeichnet, dass** die Halter (8, 12, 13) mechanische Halter mit einem Feststellsystem sind, dass von unten nach oben wirkt.

## Revendications

1. Etabli pour la coupe de sections (P), **caractérisé en ce qu'**il comprend deux surfaces de support horizontales (1), dotées d'une pluralité de rainures curvilignes (10), agencées sur des côtés opposés par rapport à la tête d'une machine de coupe (2) de laquelle elles sont solidaires, lesdites surfaces de support (1) étant raccordées à un châssis qui supporte une barre de butée (6), parallèle à la lame (3) de ladite machine de coupe (2), pouvant coulisser le long de deux guides linéaires ou plus (7) à proximité desquels on agence une barre graduée (9) appropriée pour indiquer la distance transversale par rapport à ladite lame (3) et dotée de moyens pour bloquer ladite barre de butée (6), ainsi que d'une paire de supports ajustables (13) appropriés pour bloquer la section (P) à proximité d'une barre de butée (14) de la machine de coupe (2), au niveau de laquelle la lame (3) fonctionne.

2. Etabli selon la revendication 1, **caractérisé en qu'**il comprend en outre au moins deux guides linéaires obliques (11) appropriés pour permettre le coulissement d'au moins deux supports supplémentaires (12) sur les surfaces de support (1).

3. Etabli selon la revendication 2, **caractérisé en ce que** les guides obliques (11) sont agencés sur les surfaces de support (1) afin de former avec la lame (3) un angle compris entre 15° et 50°.

4. Etabli selon la revendication 2 ou 3, **caractérisé en ce que** les supports supplémentaires (12) sont montés sur des supports articulés.

5. Etabli selon l'une quelconque des revendications précédentes, **caractérisé en ce que** deux supports supplémentaires ou plus (8) sont solidaires de la barre de butée (6).

6. Etabli selon l'une quelconque des revendications précédentes, **caractérisé en ce que** chacun desdits supports supplémentaires (8) est agencé au niveau de chaque guide linéaire (7).

7. Etabli selon l'une quelconque des revendications précédentes, **caractérisé en ce que** le châssis est composé de tiges longitudinales (4) supportant des traverses (4').

8. Etabli selon l'une quelconque des revendications précédentes, **caractérisé en ce que** l'ensemble composé du châssis et des surfaces de support (1) est supporté par des pattes (5) qui sont réglables en hauteur.

9. Etabli selon l'une quelconque des revendications précédentes, **caractérisé en ce que** les surfaces de support (1) et/ou le châssis ont une surface supérieure en caoutchouc ou similaire appropriée pour empêcher les sections (P) de coulisser ou de se rayer.

10. Etabli selon l'une quelconque des revendications précédentes, **caractérisé en ce que** les supports (8, 12, 13) sont des supports mécaniques avec un système de blocage agissant de bas en haut.
